# EUROPÄISCHE PATENTSCHRIFT

(11) **EP 1 428 432 B1**
(45) Veröffentlichungstag und Bekanntmachung des Hinweises auf die Patenterteilung: **16.11.2011**
(21) Anmeldenummer: 03027886.5
(22) Anmeldetag: 04.12.2003
(51) Int. Cl.: A01L 7/02

(54) **Hufeisenförmige Hufbeschlageinlage**
Horseshoe insert
Garniture pour fer à cheval

(30) Priorität: 12.12.2002 DE 20219286 U
(43) Veröffentlichungstag der Anmeldung: 16.06.2004
(73) Patentinhaber: CERA Handelsgesellschaft mbH, 87674 Ruderatshofen-Immenhofen (DE)
(72) Erfinder: Rafeld, Karl, 87499 Wildpoldsried (DE)
(74) Vertreter: Hutzelmann, Gerhard

(56) Entgegenhaltungen:
- WO-A-02/11533
- US-A- 3 952 807
- US-B1- 6 244 352

## Beschreibung

Die Erfindung betrifft eine hufeisenförmige Hufbeschlageinlage gemäß dem Oberbegriff des Anspruchs 1.

Derartige Einlagen sind beispielsweise aus der OS 36 44 706 bekannt. Sie dienen zur Vermeidung des Anhaftens von insbesondere Schnee und Eis zwischen den beiden Schenkeln des Hufbeschlags und der Hufoberfläche, da bei derartigen Anhaftungen nicht nur die Trittsicherheit des Huftieres beeinträchtigt ist, sondern auch die Verletzungsgefahr erhöht wird.

Durch die bekannte Hufbeschlageinlage werden die genannten Nachteile nicht bzw. nicht vollständig beseitigt, obgleich sie bereits von dem schon früher bekannten Gedanken Gebrauch macht, die flache flexible Materialeinlage, die beispielsweise aus Kunststoff besteht, mit einem schlauchförmigen Wulst zu versehen, der wenigstens teilweise einen luftgefüllten Hohlraum aufweist, um beim Auftreten des Hufes bzw. Hufbeschlags auf einen festen, insbesondere mit Schnee und Eis bedeckten Untergrund den Wulst elastisch zusammenzudrücken und dadurch eine Federkraft zu erzeugen, die bei der Entlastung des Beschlags zu einem Auswerfen des zwischen den Schenkeln des Beschlags eingeschlossenen Fremdmaterials führt.

Die Tatsache, daß die bekannte Hufbeschlageinlage keine optimale Wirkung bei der Vermeidung des Anhaftens von Fremdkörpern an der Hufoberfläche zwischen den Beschlagschenkeln erreichen läßt, ist nicht zuletzt darauf zurückzuführen, daß nicht erkannt wurde, daß das elastische Verhalten des Wulstes an den Auftritt des Hufes auf den Untergrund anzupassen ist.

Bekanntlich setzt das Huftier, beispielsweise ein Pferd, seine Hufe beim Gehen oder Traben in einer auf dem Untergrund abrollenden Weise derart auf, daß zunächst das vordere Ende des Hufbeschlags den Boden berührt. Mit zunehmender Gewichtsverteilung nach hinten berühren dann kontinuierlich die nach hinten folgenden Oberflächenteile des Beschlags den Boden. Dieses Abrollen bewirkt, daß zunächst der größte Teil des Gewichtes des Tieres gewissermaßen an der Hufspitze gegenüber der Standfläche, also dem Boden eine gewichtsabhängige Druckkraft erzeugt, die den durchgehenden Wulst so stark belastet, daß seine Standzeit, selbstverständlich in Abhängigkeit von den für die Beschlageinlage verwendeten Materialien, relativ gering ist, der Wulst sich also extrem abnutzt und dadurch auch seine hinteren Teile, die an den beiden sich gegenüberliegenden Schenkeln des Beschlags zu finden sind, ihrer federnden Auswurffunktion weitgehend beraubt werden. Um diese Nachteile zu vermeiden und insbesondere die Funktionsdauer und damit Standzeit derartiger Hufbeschlageinlagen erheblich zu verbessern, schlägt die Erfindung vor, daß der Wulst ein schlauchförmiges Hohlkammerprofil mit wenigstens einem ovalen Hohlraum bildet, sich bis zu einem die beiden Schenkel des Hufbeschlags im Bereich ihrer Enden verbindenden, brückenförmigen Verbindungssteg erstreckt und am vorderen Ende des Hufbeschlags im Bereich der Verbindungsstelle der beiden Schenkel eine Unterbrechung aufweist, und daß die Kunststoffmaterialplatte zwischen Hufbeschlag und Huf dem Umriß des Hufbeschlags folgend, jenseits des Verbindungsstegs, in Richtung auf die Schenkelenden wulstfrei ist.

Das schlauchförmige Hohlkammerprofil bietet aufgrund seiner Querschnittsform und seiner Erstreckung an der inneren Randkante des Hufbeschlags mit Unterbrechungen im vorderen und hinteren Hufbereich Gewähr für die Verhinderung von insbesondere Schnee- und Eisklumpenbildung auf der Hufoberfläche, da sowohl das elastische Verhalten der Kunststoffmaterialplatte als auch die Anordnung des Verbindungsstegs am Hufbeschlagende mit seiner Federungseigenschaft senkrecht zur Hufoberfläche zu einem Bewegungsspiel beim Auftritt des Hufes führen, daß jeder Schnee- und/oder Eisverfestigung entgegenwirkt.

Der Erfindungsvorschlag bietet somit eine geglückte Kombination von konstruktiven Maßnahmen an Hufbeschlageinlagen und Hufbeschlägen selbst, die zu überraschenden Reinigungs- bzw. Reinhaltungseffekten führt.

Vorteilhafte Ausgestaltungen der Erfindung sind in den Unteransprüchen gekennzeichnet.

Die Erfindung wird nachfolgend anhand der in der Zeichnung dargestellten Ausführungsbeispiele näher erläutert.

In der Zeichnung zeigen:
- Fig. 1: eine Draufsicht eines Kunststoffhufbeschlags ohne Beschlageinlage und Verbindungssteg,
- Fig. 2: eine der Fig. 1 vergleichbare Draufsicht eines Kunststoffhufbeschlages mit Beschlageinlage und Verbindungssteg,
- Fig. 3: eine Draufsicht einer Ausführungsform der Hufbeschlageinlage in einem der Fig. 1 und 2 entsprechenden Maßstab,
- Fig. 4: eine Teilquerschnittsansicht der Hufbeschlageinlage längs der Linie A1-A1 in Fig. 3, in einem größeren Maßstab,
- Fig. 5: eine Teilquerschnittansicht einer anderen Ausführungsform der Hufbeschlageinlage längs der Linie A2-A2 in Fig. 3, in einem größeren Maßstab,
- Fig. 6: eine Teilquerschnittansicht einer weiteren anderen Ausführungsform der Hufbeschlageinlage längs der Linie A4-A4 in Fig. 3, in einem größeren Maßstab, und
- Fig. 7: eine Teilquerschnittansicht einer weiteren anderen Ausführungsform der Hufbeschlageinlage längs der Linie A3-A3 in Fig. 3, in einem größeren Maßstab.

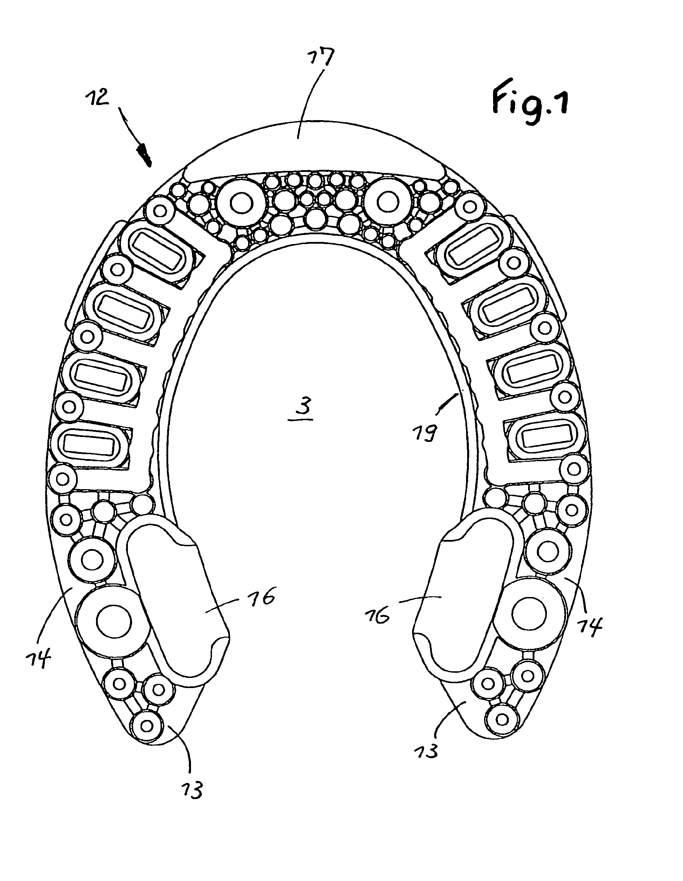

Der in Fig. 1 dargestellte Kunststoffhufbeschlag 12 ist in an sich bekannter Weise mit zwei Schenkeln 14 versehen, die als erhabene Körper die Hufoberfläche 3 umschließen und im Bereich ihrer unteren Enden 13 Aussparungen 16 zur Aufnahme eines die beiden Enden verbindenden, brückenförmigen Verbindungsstegs 15 aufweisen, der in an sich bekannter Weise an den Schenkeln 14 beispielsweise mittels Schrauben 18 befestigt wird.

Die Oberfläche des Hufbeschlags ist abgesehen von dem vorderen Beschlagende 17 profiliert, um dem so beschlagenen Huf Trittfestigkeit zu verleihen, die Rutschgefahr also zu vermindern.

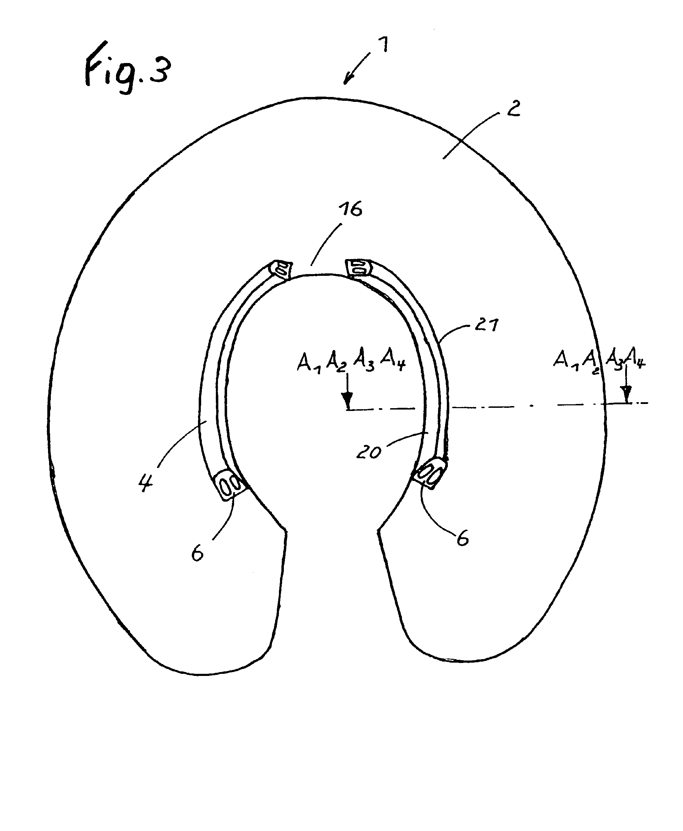

Zwischen dem Hufbeschlag 12 und dem Huf wird eine hufeisenförmige Hufbeschlageinlage 1 angeordnet, die in Fig. 3 dargestellt ist und verhindern soll, daß sich insbesondere Schnee und Eis zwischen den beiden Schenkeln 14 des Hufbeschlags 12 auf der Hufoberfläche 3 festtreten und dadurch die Trittsicherheit des Huftieres beeinträchtigen.

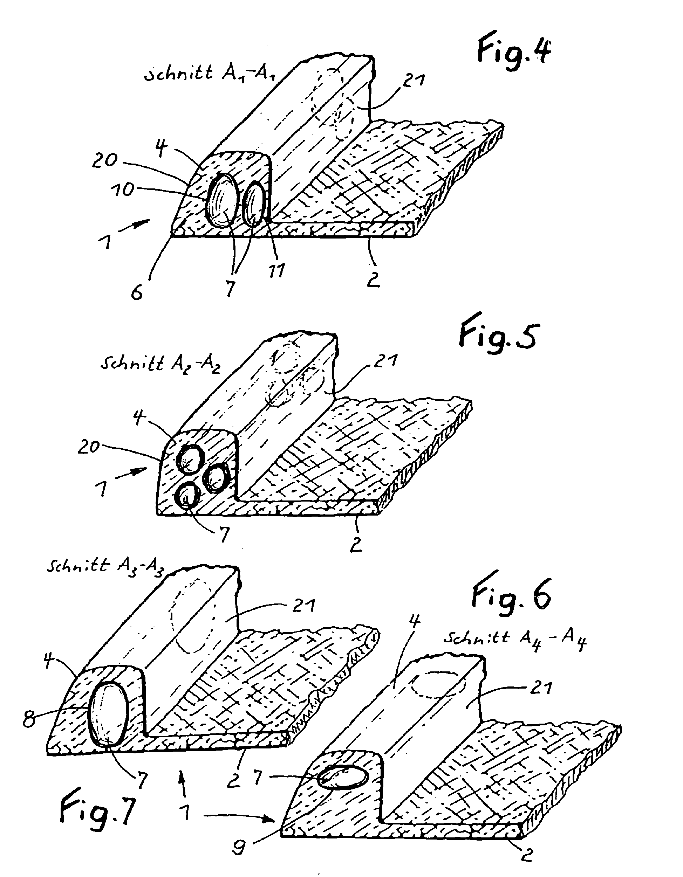

Die Hufbeschlageinlage 1 weist die Form einer im wesentlichen flachen, aus flexiblem Kunststoffmaterial bestehenden Platte 2 auf, die ihrem Außen- und Innenumriß nach an den Hufbeschlag 12 angepaßt ist und an ihrem inneren Umfang mit einem die Hufoberfläche 3 begrenzenden schlauchförmigen Wulst 4 versehen ist, der ein schlauchförmiges Hohlkammerprofil 6 aufweist, das in den Fig. 4 bis 7 in verschiedenen Ausführungsformen dargestellt ist und sich etwa bis zur Oberkante des Hutbeschlags erstreckt.

Dieses schlauchförmige Hohlkammerprofil 6 bildet wenigstens einen ovalen Hohlraum 7, wie aus Fig. 6 und Fig. 7 ersichtlich, der bei diesen Ausführungsformen als liegende bzw. stehende Ellipse ausgebildet ist, um dadurch die Elastizität des Hohlkammerprofils 6 so zu steigern, daß sich der Wulst beim Auftreten des Hufs auf einem festen Untergrund in einer Weise elastisch verformt, die das Entstehen von Feststoffansammlungen, insbesondere Eis- und Schneeverfestigungen auf der Hufoberfläche 3 verhindert.

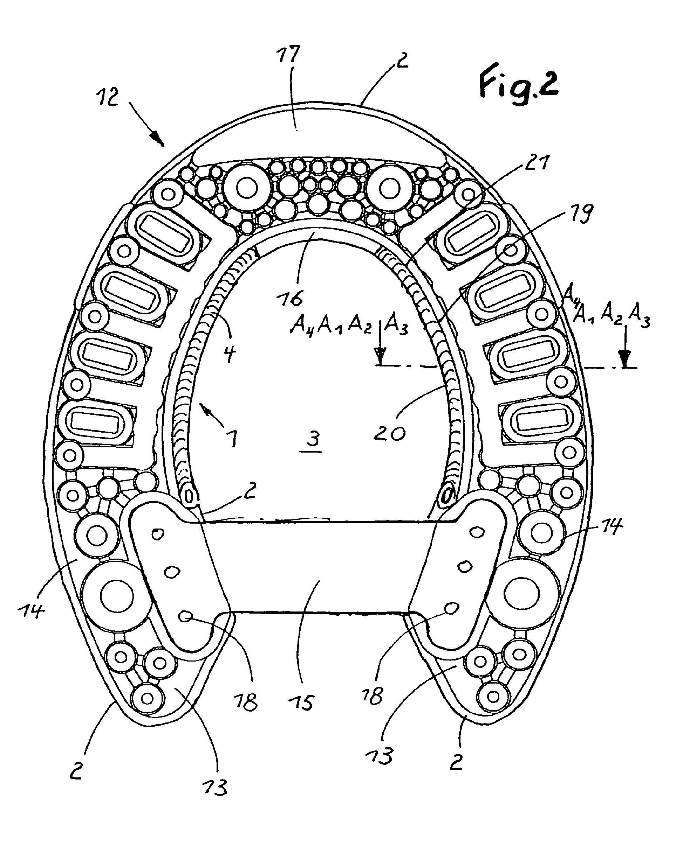

Der schlauchförmige Wulst 4 erstreckt sich, wie aus Fig. 2 ersichtlich, bis zu dem die beiden Schenkel 14 des Hufbeschlags 12 im Bereich ihrer Enden 13 verbindenden Verbindungssteg 15 und ist darüber hinaus am vorderen Ende 17 des Hufbeschlags im Bereich der Verbindungsstelle der beiden Schenkel mit einer Unterbrechung 16 versehen, wie aus den Fig. 2 und 3 ersichtlich. Jenseits des Verbindungsstegs 15, in Richtung auf die Schenkelenden 13, ist jedoch die Kunststoffmaterialplatte 2 der Beschlageinlage, die im übrigen zusammen mit dem Hufbeschlag 12 auf dem Huf in an sich bekannter Weise befestigt wird, wulstfrei. Durch diese begrenzte Ausbildung des Wulstes wird der gewünschte feste Sitz des Verbindungsstegs 15 in den Aussparungen 16 sichergestellt und darüber hinaus vermieden, so daß die Wulstenden unter Belastung beim Auftreten des Hufes zu stark verformt werden, daß sie an den Schenkelenden 13 von der Kunststoffmaterialplatte abreißen und dadurch die Funktion des Wulstes 4 insgesamt beeinträchtigen.

Das Hohlkammerprofil 6 ist, abgesehen von der Unterbrechung 16 am vorderen Ende 17 des Hufbeschlags 12 durchgehend ausgebildet, und an Stelle einer einzigen Ellipse 8, 9, wie aus den Figuren 6 und 7 ersichtlich, lassen sich auch mehrere, insbesondere parallele Ellipsen, wie aus Fig. 4 ersichtlich. verwenden, wobei bei stehender Anordnung der Ellipsen deren kleinere Achse sich etwa parallel zur Hufsohle erstreckt, während bei liegender Anordnung, wie aus Fig. 6 ersichtlich, die große Achse der Ellipse etwa parallel zur Hufsohle verläuft.

Die Größe der Querschnittsfläche des Hohlraums 7 des Hohlkammerprofils 6 beträgt vorteilhafterweise 1/3 bis 1/2 des Gesamtquerschnitts des Wulstes, und die beiden unteren Enden des Wulstes 4, die in der Nähe des Verbindungsstegs 15 liegen, sind, wie aus Fig. 2 ersichtlich, so abgeschnitten, daß der ovale Hohlraum 7 offen ist.

Aus Fig. 5 ist zu entnehmen, daß die Ausbildung des Hohlraums 7 des Hohlkammerprofils nicht auf eine bestimmte Ellipsenform beschränkt ist und auch nicht auf eine bestimmte Anzahl derartiger Hohlräume, sondern an die vom Beschlageinlagen-Material gewünschten Elastizitätsbedingungen für den Wulst 4 angepaßt ist, wobei auch der Wulstquerschnitt zweckmäßigerweise so gestaltet ist, daß die innere Randkante 19 des Hufbeschlags 12 von der ihr gegenüberliegenden Wandung 21 des Wulstes dicht berührt wird, während die äußere Wandung 20 des Wulstes, die der Hufoberfläche 3 zugewendet ist, entweder ebenfalls wie die innere Wandung 21 im wesentlichen senkrecht zur Kunststoffmaterialplatte 2 verläuft, wie aus Fig. 5 ersichtlich, oder zu letzterer schräg abfallend, wie aus den Figuren 4, 6 und 7 ersichtlich.

## Patentansprüche

1. Hufeisenförmige Hufbeschlageinlage in Form einer im wesentlichen flachen, aus flexiblem Kunststoffmaterial bestehenden Platte, die zur Verhinderung des Anhaftens insbesondere von Schnee und Eis an der Hufsohle in dem von dem Hufbeschlag umschlossenen Raum zwischen Hufbeschlag und Hufsohle anordbar ist, wobei die Hufbeschlageinlage mit einem den umschlossenen Raum wenigstens teilweise begrenzenden schlauchförmigen Wulst versehen ist, der wenigstens teilweise einen luftgefüllten Hohlraum aufweist, auf der Kunststoffmaterialplatte aufsteht und sich etwa bis zur Oberkante des Hufbeschlags erstreckt, **dadurch gekennzeichnet, daß** der Wulst (4) ein schlauchförmiges Hohlkammerprofil (6) mit wenigstens einem ovalen Hohlraum (7) bildet, sich bis zu einem die beiden Schenkel (14) des Hufbeschlags (2) im Bereich ihrer Enden (13) verbindenden, brückenförmigen Verbindungssteg (15) erstreckt und am vorderen Ende (17) des Hufbeschlags (12) im Bereich der Verbindungsstelle der beiden Schenkel (14) eine Unterbrechung(16) aufweist, und daß die Kunststoffmaterialplatte (2) zwischen Hufbeschlag (12) und Huf dem Umriß des Hufbeschlags folgend, jenseits des Verbindungsstegs (15) in Richtung auf die Schenkelenden (13) wutstfrei ist.

2. Hufbeschlageinlage nach Anspruch 1. **dadurch gekennzeichnet, daß** das Hohlkammerprofil (6) abgesehen von der Unterbrechung (16) am vorderen Ende (17) des Hufbeschlags (12), durchgehend ausgebildet ist.

3. Hufbeschlageinlage nach Anspruch 1 oder 2, **dadurch gekennzeichnet, daß** der wenigstens eine ovale Hohlraum (7) wenigstens eine Ellipse (8, 9, 10, 11) bildet.

4. Hufbeschlageinlage nach Anspruch 3, **dadurch gekennzeichnet, daß** die wenigstens eine Ellipse (8, 10, 11) stehend angeordnet ist, derart, daß sich ihre kleine Achse etwa parallel zur Hufsohle und ihre große Achse etwa parallel zur Höhe des Wulstes (4) erstrecken.

5. Hufbeschlageinlage nach Anspruch 3. **dadurch gekennzeichnet, daß** die Ellipse (9) liegend angeordnet ist, derart, daß sich ihre große Achse etwa parallel zur Hufsohle und ihre kleine Achse etwa parallel zur Höhe des Wulstes (4) erstrecken.

6. Hufbeschlageinlage nach einem der Ansprüche 1 bis 5, **dadurch gekennzeichnet, daß** die Größe der Querschnittsfläche des Hohlraums (7) 1/3 bis 1/2 des Gesamtquerschnitts des Wulstes (4) beträgt.

7. Hufbeschlageinlage nach einem der Ansprüche 1 bis 5, **dadurch gekennzeichnet, daß** der Hohlraum (7) im wesentlichen in der oberen Querschnittshälfte des Wulstes (4) angeordnet ist.

8. Hufbeschlageinlage nach einem der Ansprüche 1 bis 7, **dadurch gekennzeichnet, daß** der Hohlraum (7) von zwei mit Abstand parallelen. stehend angeordneten Ellipsen (10. 11) gebildet wird.

9. Hufbeschlageinlage nach einem der Ansprüche 1 bis 7, **dadurch gekennzeichnet, daß** der Hohlraum (7) von zwei mit Abstand parallelen, liegend angeordneten Elllipsen (9) gebildet wird.

10. Hufbeschlageinlage nach Anspruch 8 oder 9. **dadurch gekennzeichnet, daß** die Ellipsen (9, 10, 11) gleich groß sind.

11. Hufbeschlageinlage nach einem der Ansprüche 1 bis 10, **dadurch gekennzeichnet, daß** der ovale Hohlraum (7) unter dem Gewicht des Hufs elastisch zusammenpreßbar und nach Entlastung in die Ausgangslage zurückfederbar ausgebildet ist.

12. Hufbeschlageinlage nach einem der Ansprüche 1 bis 11, **dadurch gekennzeichnet, daß** die Enden des ovalen Hohlraums (7) offen sind.

## Claims

1. Horseshoe-shaped horseshoe insert in the form of a substantially flat plate which consists of flexible plastics material and which for prevention of adhesion of, in particular, snow and ice to the hoof sole can be arranged in the space, which is enclosed by the horseshoe, between horseshoe and hoof sole, wherein the horseshoe insert is provided with a hose-shaped bead, which at least partly bounds the enclosed space and which has at least in part an air-filled cavity and stands on the plastics material plate and which extends approximately up to the upper edge of the horseshoe, **characterised in that** the bead (4) forms a hose-shaped hollow chamber section (6) with at least one oval cavity (7) and extends up to a bridge-shaped connecting web (15) connecting the two limbs (14) of the horseshoe (2) in the region of the ends (13) thereof, the bead having an interruption (16) at the front end (17) of the horseshoe (12) in the region of the connecting point of the two limbs (14), and that the plastics material plate (2) follows the outline of the horseshoe between horseshoe (12) and hoof and is bead-free on the other side of the connecting web (15) in direction towards the limb ends (13).

2. Horseshoe insert according to claim 1, **characterised in that** the hollow chamber section (6) is formed to be continuous apart from the interruption (16) at the front end (17) of the horseshoe (12).

3. Horseshoe insert according to claim 1 or 2, **characterised in that** the at least one oval cavity (7) forms at least one ellipse (8, 9, 10,11).

4. Horseshoe insert according to claim 3, **characterised in that** the at least one ellipse (8, 10, 11) is arranged to be upright in such a manner that the small axis thereof extends approximately parallelly to the hoof sole and the large axis thereof extends approximately parallel to the height of the bead (4).

5. Horseshoe insert according to claim 3, **characterised in that** the ellipse (9) is arranged to be horizontal in such a manner that the large axis thereof extends substantially parallel to the hoof sole and the small axis thereof extends substantially parallel to the height of the bead (4).

6. Horseshoe insert according to any one of claims 1 to 5, **characterised in that** the size of the cross-sectional area of the cavity (7) is 1/3 to 1/2 of the total cross-section of the bead (4).

7. Horseshoe insert according to any one of claims 1 to 5, **characterised in that** the cavity (7) is arranged substantially in the upper cross-sectional half of the bead (4).

8. Horseshoe insert according to any one of claims 1 to 7, **characterised in that** the cavity (7) is formed by two ellipses (10, 11) arranged upright and parallelly at a spacing.

9. Horseshoe insert according to any one of claims 1 to 7, **characterised in that** the cavity (7) is formed by two ellipses (10, 11) arranged horizontally and parallelly at a spacing.

10. Horseshoe insert according to claim 8 or 9, **characterised in that** the ellipses (9, 10, 11) are of the same size.

11. Horseshoe insert according to any one of claims 1 to 10, **characterised in that** the oval cavity (7) is resiliently compressible under the weight of the hoof and is constructed to be able to spring back to the startling position under relief of load.

12. Horseshoe insert according to any one of claims 1 to 11, **characterised in that** the ends of the oval cavity (7) are open.

## Revendications

1. Garniture de ferrure de sabot en forme de fer à cheval, sous la forme d'une plaquette essentiellement plate constituée de matière synthétique flexible qui, afin d'empêcher l'adhérence notamment de la neige et de la glace sur la sole, peut être disposée dans l'espace enfermé par la ferrure de sabot entre la ferrure de sabot et la sole, sachant que la garniture de ferrure de sabot est dotée d'un bourrelet tubulaire qui délimite au moins partiellement l'espace enfermé, qui présente au moins pour partie une cavité remplie d'air, qui est dressé sur la plaquette en matière synthétique et qui s'étend environ jusqu'à l'arête supérieure de la ferrure de sabot, **caractérisée en ce que** le bourrelet (4) forme un profilé tubulaire (6) à compartiments creux doté d'au moins une cavité ovale (7), s'étend jusqu'à une barrette de liaison (15) en forme de pont reliant les deux branches (14) de la ferrure de sabot (12) dans la région de leurs extrémités (13) et présente une interruption (16) à l'extrémité avant (17) de la ferrure de sabot (12), dans la région du point de liaison des deux branches (14), et **en ce que** la plaquette (2) en matière synthétique, qui suit le contour de la ferrure de sabot entre la ferrure de sabot (12) et le sabot, est dépourvue de bourrelet au-delà de la barrette de liaison (15) en direction des extrémités (13) des branches.

2. Garniture de ferrure de sabot selon la revendication 1, **caractérisée en ce que** le profilé (6) à compartiments creux est réalisé ininterrompu, à l'exception de l'interruption (16) à l'extrémité avant (17) de la ferrure de sabot (12).

3. Garniture de ferrure de sabot selon la revendication 1 ou 2, **caractérisée en ce que** la cavité ovale au moins unique (7) forme au moins une ellipse (8, 9, 10, 11).

4. Garniture de ferrure de sabot selon la revendication 3, **caractérisée en ce que** l'ellipse au moins unique (8, 10, 11) est disposée en position verticale, de telle sorte que son petit axe s'étend environ parallèlement à la sole et que son grand axe s'étend environ parallèlement à la hauteur du bourrelet (4).

5. Garniture de ferrure de sabot selon la revendication 3, **caractérisée en ce que** l'ellipse (9) est disposée en position horizontale, de telle sorte que son grand axe s'étend environ parallèlement à la sole et que son petit axe s'étend environ parallèlement à la hauteur du bourrelet (4).

6. Garniture de ferrure de sabot selon l'une des revendications 1 à 5, **caractérisée en ce que** la taille de l'aire de section de la cavité (7) est égale à 1/3 à 1/2 de la section totale du bourrelet (4).

7. Garniture de ferrure de sabot selon l'une des revendications 1 à 5, **caractérisée en ce que** la cavité (7) est disposée pour l'essentiel dans la moitié supérieure
de la section du bourrelet (4).

8. Garniture de ferrure de sabot selon l'une des revendications 1 à 7, **caractérisée en ce que** la cavité (7) est formée par deux ellipses (10, 11) disposées en position verticale, parallèles à distance entre elles.

9. Garniture de ferrure de sabot selon l'une des revendications 1 à 7, **caractérisée en ce que** la cavité (7) est formée par deux ellipses (9) disposées en position horizontale, parallèles à distance entre elles.

10. Garniture de ferrure de sabot selon la revendication 8 ou 9, **caractérisée en ce que** les ellipses (9, 10, 11) sont de même taille.

11. Garniture de ferrure de sabot selon l'une des revendications 1 à 10, **caractérisée en ce que** la cavité ovale (7) est conçue pour pouvoir être comprimée élastiquement sous le poids du sabot, et revenir élastiquement dans l'état initial lorsqu'elle est soulagée.

12. Garniture de ferrure de sabot selon l'une des revendications 1 à 11, **caractérisée en ce que** les extrémités de la cavité ovale (7) sont ouvertes.
